# FASCICULE DE BREVET EUROPEEN

(11) **EP 0 518 766 B1**
(45) Date de publication et mention de la délivrance du brevet: **17.04.1996**
(21) Numéro de dépôt: 92401616.5
(22) Date de dépôt: 11.06.1992
(51) Int. Cl.: C25D 11/26

(54) **Bain d'attaque acide des alliages de titane avant oxydation anodique macrographique**
Saures Ätzbad für Titanlegierungen vor anodischer makrographischer Oxidation
Acid etching bath for titanium alloys before macrographic anodic oxydation

(30) Priorité: 12.06.1991 FR 9107148
(43) Date de publication de la demande: 16.12.1992
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Gondel, Claude Guy Georges, F-95260 Beaumont sur Oise (FR); Hennebelle, Christian Paul-Henri-Georges, F-75019 Paris (FR)

(56) Documents cités:
- PATENT ABSTRACTS OF JAPAN vol. 11, no. 297 (C-448)(2744) 25 Septembre 1987 & JP-A-62086196

## Description

Les conditions de fonctionnement des turbomachines, notamment aéronautiques, conduisent à l'emploi de nombreuses pièces en titane ou alliage de titane. Il est important que ces pièces subissent un contrôle non destructif susceptible de mettre en évidence les différents défauts qu'elles peuvent comporter. En particulier il y a lieu de rechercher les éventuels défauts d'élaboration - ségrégations, inclusions, porosités etc... - de transformation - criques, incrustations, hétérogénéités, contaminations etc... - d'usinage ou de polissage - écrouissage, surchauffes locales, etc...

A cet effet, il existe un procédé d'attaque électrochimique bien connu dans les milieux professionnels sous le nom de "BLUE-ETCH".

Ce procédé d'attaque électrochimique consiste, d'une manière générale, à réaliser sur la pièce à contrôler les opérations suivantes :
- 1 - Dégraissage classique ou trempé dans un bain alcalin.
- 2 - Rinçage à l'eau froide dans un bac d'eau courante ou par aspersion.
- 3 - Enlèvement éventuel de la couche écrouies, environ 5 µm par attaque fluo-nitrique.
- 4 - Rinçage à l'eau froide dans un bac d'eau courante.
- 5 - Activation chimique au trempé dans un bain sel acide pour attaque avec effet macrographique.
- 6 - Rinçage à l'eau froide dans un bac d'eau courante
- 7 - oxydation anodique dans un bain de phosphate trisodique, la pièce à contrôler étant en position d'anode.
- 8 - Rinçage à l'eau froide dans un bac d'eau courante.
- 9 - Révélation par attaque partielle dans un bain nitrofluorhydrique.
- 10 - Rinçage à l'eau froide le plus rapidement possible et le plus complètement possible et séchage de la pièce.
- 11 - Lecture des défauts qui apparaissent selon des formes et des couleurs (blanc, bleu, gris-bleu) qui leur sont propres.

Ce procédé connu présente toutefois quelques inconvénients.

En particulier, les produits existants, généralement utilisés pour l'activation chimique et disponibles dans le commerce sont relativement coûteux, d'un usage délicat et se détériorent rapidement. La présente invention a pour but de remédier à ces inconvénients, à cet effet elle a pour objet un bain d'attaque acide dont la composition est la suivante : Acide sulfurique (H₂SO₄) (de densité 1,83) à raison de 75 ± 5 ml / l de bain, Fluorure de sodium (Na F) à raison de 11 à 15 g/l de bain, Eau (H₂O) en quantité suffisante pour complêter le litre de bain.

Avantageusement, le bain conforme à l'invention peut être rechargé, en particulier lorsque la vitesse d'attaque atteint le minimum acceptable soit 0,60 µ m/mn. Conformément à l'invention, la composition de cette recharge est la suivante H₂SO₄ : 5 à 10 ml/l et NaF : 3 à 4g/l.

L'invention sera mieux comprise et d'autres caractéristiques apparaîtront à la lecture des précisions et commentaires qui vont suivre.

Les produits disponibles dans le commerce, utilisés dans les conditions permettant un enlèvement de matière compris entre 0,8 et 1,3 µm pour une immersion de 90s, c'est-à-dire avec une concentration de 250g/l, présentant comme il a été indiqué plus haut, un certain nombre d'inconvénients.

Entre la sortie du bain activation chimique, opération -5- ci-dessus et l'immersion en cuve de rinçage -6- s'écoule un temps suffisant pour que le réactif d'attaque, entraîné par les pièces et par les montages, poursuive son action en laissant des marques d'égouttage. Ces "coulures" empêcheront, ou tout au moins limiteront, la lecture des défauts étirés dans le même sens, le fibrage par exemple ; leur intensité est fonction de la géométrie de la pièce, du type de montage support utilisé, de l'agressivité et de la température du bain. Par ailleurs, la durée de vie du bain est faible à la vitesse prescrite et il n'y a pas possibilité d'ajouts de sel destinés à compenser l'épuisement puisque la saturation est proche. De plus, une régulation de température est obligatoire car la vitesse d'attaque est multipliée par 1,5 ou 2 pour une élévation de 10°C de la température du bain.

Enfin, lors de l'immersion des pièces, la vitesse d'attaque des pièces n'atteint pas son maximum immédiatement, mais seulement après une période dite de dépassivation qui peut être de 10 à 20s. Ce temps de dépassivation n'est pas négligeable devant le temps d'immersion des pièces, environ 1,5 mn, et conduit à des erreurs systématiques.

Pour remédier à ces différents inconvénients on a songé à utiliser une concentration de 120 à 150 g/l, avec des rechargements très fréquents de +30 à + 60g/l destinés à maintenir une certaine efficacité à la température d'utilisation. Malheureusement, si les coulures sont ainsi limitées et ne perturbent pas la lecture, la durée de vie du bain est assez faible et, surtout, l'assurance qualité est très aléatoire. En effet, la vitesse d'action est beaucoup trop variable et interdit l'automatisation des chaînes, l'épaisseur enlevée est faible, le temps de dépassivation est trop long et les recharges de bain peu efficaces.

Ces différentes constations ont conduit à l'élaboration du bain selon l'invention dont la composition a été donnée ci-dessus. Avec ce nouveau bain, non seulement la qualité de l'attaque macrographique est excellente et les coulures limitées, mais il y a aussi une nette amélioration de l'assurance qualité. En effet, la durée de vie est longue et la vitesse d'attaque, donc l'épaisseur enlevée, constante ce qui permet d'envisager une automatisation de la chaine. Le temps de dépassivation peut être pris en compte de manière précise et les rajouts, dans les quantités qui caractérisent l'invention, sont efficaces et modérés.

Cette composition se révèle être particulièrement fiable pour une température d'utilisation normale comprise entre 16 et 25°C facilement obtenue, même en période chaude, au moyen d'une agitation à l'air comprimé.

Enfin, ce procédé est peu couteux comparé à l'art antérieur.

## Revendications

1. Bain d'attaque acide des alliages de titane avant oxydation anodique macrographique pour procédé d'attaque électrochimique comportant successivement, un dégraissage, une activation par attaque acide, une oxydation anodique dans un bain de phosphate trisodique, et une révélation par attaque dans un bain nitrofluorhydrique, toutes ces étapes étant séparées par des rincages, caractérisé en ce qu'il se compose de :
- 75 ± 5 ml / l de bain d'acide sulfurique (H₂SO₄) (densité 1,83)
- 11 à 15 g/l de fluorure de sodium (NaF)
- quantité suffisante pour compléter 1 Litre d'eau (H₂O)

2. Bain d'attaque acide selon la revendication 1, caractérisé en ce qu'il est rechargé dans les quantités suivantes :
- 5 à 10 ml / l d'acide sulfurique (H₂SO₄)
- 3 à 4 g / l de fluorure de sodium (NaF)

3. Bain d'attaque selon la revendication 2, caractérisé en ce qu'il est rechargé lorsque la vitesse d'attaque devient inférieure à 0,6 µ m/mn.

4. Bain d'attaque selon l'une des revendications 1 à 3, caractérisé en ce qu'il est utilisé à température ambiante, entre 16 et 25°C, avec agitation du bain à l'air comprimé.

## Patentansprüche

1. Saures Ätzbad für Titanlegierungen vor der anodischen makrographischen Oxydation im Zuge eines elektrochemischen Ätzverfahrens, umfassend aufeinanderfolgend: die Entfettung, die Aktivierung durch saures Ätzen, die anodische Oxydation in einem Bad mit Trinatriumphosphat und die Entwicklung durch Behandlung in einem Nitrofluorwasserstoffbad, wobei alle Stufen durch Spülungen getrennt sind,
dadurch **gekennzeichnet**,
daß es aus:
75 ± 5 ml Schwefelsäure (H₂SO₄, Dichte 1,83) / Liter des Bads,
11 bis 15 g Natriumfluorid (NaF) / Liter
und Wasser (H₂O) bis zur Auffüllung auf 1 Liter zusammengesetzt ist.

2. Saures Ätzbad gemäß Patentanspruch 1,
dadurch **gekennzeichnet**,
daß es mit folgenden Mengen:
5 bis 10 ml Schwefelsäure (H₂SO₄) / Liter
3 bis 4 g Natriumfluorid (NaF) / Liter
aufgefrischt wird.

3. Saures Ätzbad gemäß Patentanspruch 2,
dadurch **gekennzeichnet**,
daß es aufgefrischt wird, wenn die Ätzgeschwindigkeit unter 0,6 µm/Min. sinkt.

4. Saures Ätzbad gemäß einem der Patentansprüche 1 bis 3,
dadurch **gekennzeichnet**,
daß es bei Raumtemperatur, zwischen 16 und 25°C, unter Bewegung desselben mittels Druckluft angewendet wird.

## Claims

1. Acid bath for etching titanium alloys before macrographic anodic oxidation for an electrochemical etching process successively comprising a degreasing operation, an activation by acidic etching, an anodic oxidation in a bath of trisodium phosphate, and a development by etching in a hydronitrofluoric bath, all of these steps being separated by rinsing operations, characterized in that it is composed of:
- 75 ± 5 ml/l of a bath of sulphuric acid (H₂SO₄) (density 1.83)
- 11 to 15 g/l of sodium fluoride (NaF)
- a sufficient amount of water (H₂O) to complete to 1 litre.

2. Acid etching bath according to Claim 1, characterized in that it is refilled with the following amounts:
- 5 to 10 ml/l of sulphuric acid (H₂SO₄)
- 3 to 4 g/l of sodium fluoride (NaF).

3. Etching bath according to Claim 2, characterized in that it is refilled when the rate of etching becomes less than 0.6 µm/min.

4. Etching bath according to one of Claims 1 to 3, characterized in that it is used at ambient temperature, between 16 and 25°C, with stirring of the bath using compressed air.
